(19) Europäisches Patentamt
European Patent Office
Office européen des brevets

(11) **EP 3 285 442 B1**

(12) **EUROPEAN PATENT SPECIFICATION**

(45) Date of publication and mention
of the grant of the patent:
**25.03.2020 Bulletin 2020/13**

(51) Int Cl.:
*H04L 12/721* (2013.01)     *H04L 12/707* (2013.01)

(21) Application number: **17186310.3**

(22) Date of filing: **15.08.2017**

(54) **A METHOD OF PROCESSING A SEQUENCE IN A COMPUTING SYSTEM**

VERFAHREN ZUR VERARBEITUNG EINER SEQUENZ IN EINER COMPUTERANLAGE

PROCÉDÉ DE TRAITEMENT D'UNE SÉQUENCE DANS UN SYSTÈME INFORMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.08.2016 EP 16184347
03.02.2017 EP 17154527**

(43) Date of publication of application:
**21.02.2018 Bulletin 2018/08**

(73) Proprietor: **British Telecommunications public
limited company
London EC1A 7AJ (GB)**

(72) Inventors:
• **LE, Mai
London EC4V 5BT (GB)**
• **TAYLOR, Paul
London EC4V 5BT (GB)**

(74) Representative: **British Telecommunications
public limited company
Intellectual Property Department
Ground Floor, Faraday Building
1 Knightrider Street
London EC4V 5BT (GB)**

(56) References cited:
**US-B1- 6 665 271**

• KRUSKAL J B ET AL: "AN ANTHOLOGY OF
ALGORITHMS AND CONCEPTS FOR SEQUENCE
COMPARISON", TIME WARPS, STRING EDITS
AND MACROMOLECULES : THE THEORY
ANDPRACTICE OF SEQUENCE COMPARISON,
ADDISON-WESLEY PUBLISHING CO.,
AMSTERDAM, NL, 1 January 1983 (1983-01-01),
pages 265-310, XP000570580,

**Description**

**Field of the Invention**

The present invention relates to a method of processing a sequence in a computing system, and a device for implementing said method.

**Background to the Invention**

A sequence is an ordered chain of events, and numerous examples of sequences exist in computing systems. For example, a computing system may be configured to receive or record log data relating to events that occur within the system and/or in other systems in a network. A sequence may then be defined as the order of these events (based on, for example, a timestamp). Computing systems may then analyse such received or recorded sequences as part of a process. For example, a computing system may analyse network traffic log data to identify a particular sequence that is indicative of a malicious attack, and, in response, raise a suitable alarm to a network operator. In another example, a computing system may analyse sequences of words or characters of textual artefacts (such as books, web pages, journal articles, etc.) to identify common strings, which may then be used to train a predictive text system (such as a type-ahead system used in search engines).

Computing systems often use matrices as a technique for processing sequences. For example, dynamic sequence alignment is a bioinformatics technique for comparing two sequences of amino acids (e.g. comparing G,A,T,C to G,G,A,T) to evaluate their similarity, and the present inventor has also used this technique for evaluating the similarity of a first and second network path (the sequence being the order of routers traversed by a packet in each network path). The dynamic sequence alignment technique uses both a substitution matrix and score matrix as part of this evaluation. In an example in which the similarity between a first network path defined by routers A,B,C,D and a second network path A,E,C,D is to be evaluated, the substitution matrix may be constructed as:

$$\begin{pmatrix} & A & B & C & D & E \\ A & 1 & 0 & 0 & 0 & 0 \\ B & 0 & 1 & 0 & 0 & 0 \\ C & 0 & 0 & 1 & 0 & 0 \\ D & 0 & 0 & 0 & 1 & 0 \\ E & 0 & 0 & 0 & 0 & 1 \end{pmatrix}$$

A score matrix may then be defined using the above substitution matrix and the following equations:

$$h_{i0} = -\delta \times i$$

$$h_{0j} = -\delta \times j$$

$$h_{ij} = max\{h_{i-1,j} - \delta, h_{i-1,j-1} + s(x_i, y_j), h_{i,j-1} - \delta\}$$

Where

- $i$ represents a router of the first network path and takes a value in the range {1, ..., $len_1$}, in which $len_1$ which represents the length of the first network path (i.e. the number of "hops"),
- j represents a router of the second network path and takes a value in the range {1, ..., $len_2$}, in which $len_2$ represents the length of the second network path (i.e. the number of "hops"),
- $h_{i0}$ and $h_{0j}$ are initial values needed for the recursive formula in order to compute values for the elements $h_{ij}$ of the score matrix,
- $\delta$ is a predetermined gap penalty value,
- $x_i$ and $y_j$ are the routers at positions $i$ and $j$ from the first and second network path respectively, and
- $s(x_i,y_j)$ is the value from the substitution matrix corresponding to events $x_i$ and $y_j$.

A score matrix between the first network path and second network path may then be defined as:

$$\begin{pmatrix} & A & B & C & D \\ A & h_{1,1} & h_{1,2} & h_{1,3} & h_{1,4} \\ E & h_{2,1} & h_{2,2} & h_{2,3} & h_{2,4} \\ C & h_{3,1} & h_{3,2} & h_{3,3} & h_{3,4} \\ D & h_{4,1} & h_{4,2} & h_{4,3} & h_{4,4} \end{pmatrix}$$

These values can be determined and then used to evaluate a value of similarity between the two network paths. This can be useful in network analytics when the network operator is tasked with determining the similarity between two paths when one router is used as an alternative to another router (e.g. router E is used instead of router B in the above example). However, the technique has limitations in that it cannot evaluate the similarity between two paths when a number of routers are used as an alternative to a single router (e.g. routers E and F are used instead of router B in the above example). This is a problem identified in many matrix based processing techniques, as the matrix relies on a fixed structure of rows and columns and each matrix value relates to a particular physical entity.

US 6665271 B1 discloses a system to predict characteristics of a transmission between a pair of endpoints in a network, based on historical logs.

Article "An Anthology of Algorithms and Concepts for Sequence Comparison" by Joseph B. Kruskal and David Sankoff discusses sequence comparison algorithms.

It is therefore desirable to alleviate some or all of the above problems.

## Summary of the Invention

According to a first aspect of the invention, there is provided a method as claimed in Claim 1.

According to a second aspect of the invention, there is provided a computer program product comprising instructions which, when the program is executed by a computer, causes the computer to carry out the steps of the method of the first aspect of the invention.

According to a third aspect of the invention, there is provided a device as claimed in Claim 3.

## Brief Description of the Figures

In order that the present invention may be better understood, embodiments thereof will now be described, by way of example only, with reference to the accompanying drawings in which:

Figure 1 is a schematic diagram of a Network Management System of a first embodiment of the present invention;
Figure 2 is a schematic diagram of a network including the Network Management System of Figure 1; and
Figure 3 is a flow diagram illustrating an embodiment of a method of the present invention.

## Detailed Description of Embodiments

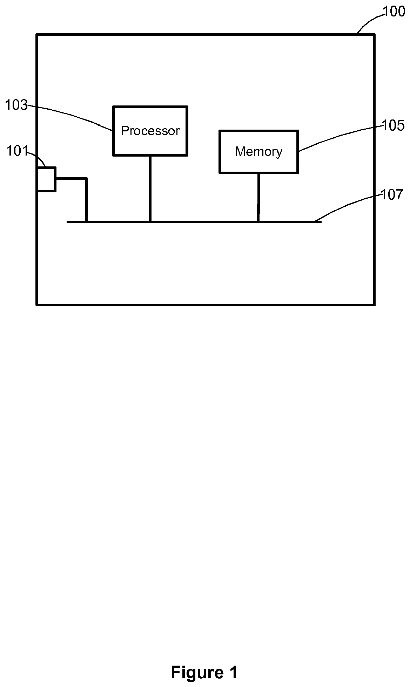

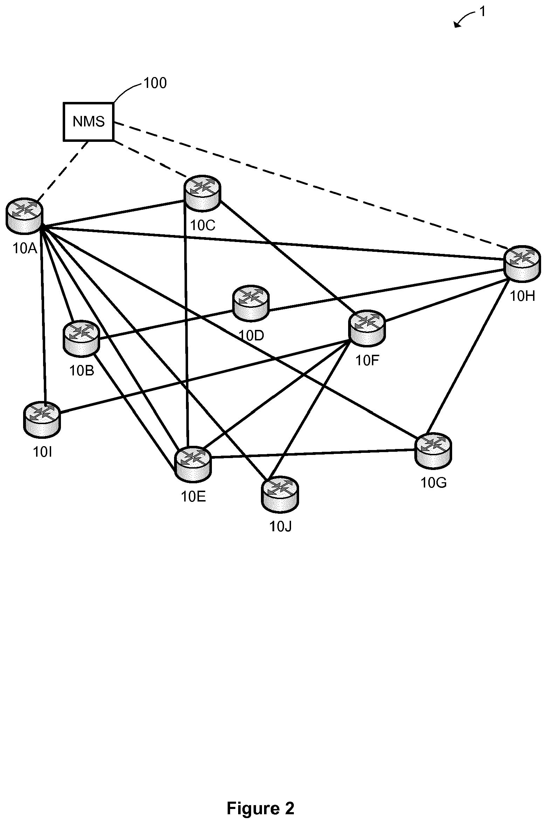

A first embodiment of a computing system 100 of the present invention will now be described with reference to Figure 1. The computing system 100 includes a transceiver 101, a processor 103, memory 105, all connected via bus 107. The computing system 100 is configured to generate data and/or receive data (via the transceiver 101), which may be stored in memory 105 and processed by processor 103. In this embodiment, the computing system 100 is a Network Management System (NMS), which is part of a network as shown in Figure 2.

Figure 2 illustrates the NMS 100 and a plurality of routers 10A...10J, wherein the routers are interconnected by a bi-directional link (e.g. optical fibre) as illustrated. The NMS 100 is able to retrieve data from the routers (which is received at the transceiver 101 and stored in memory 105).

The NMS 100 is configured to receive log data from the routers 10A...10J indicating the routes traversed by packets through the network and whether or not a particular route was successful or not. An example of this log data is illustrated in the table, below.

| Data Session ID | Data Packet ID | Transmission Attempt | Source Router | 1st Int. Router | 2nd Int. Router | 3rd Int. Router | ... | Destination Router | Success? |
|---|---|---|---|---|---|---|---|---|---|
| ds1 | dp1 | 1 | 10A | 10C | 10F | N/A | ... | 10H | Success |
| ds1 | dp2 | 1 | 10A | 10C | N/A | N/A | ... | N/A | Failure |
| ds1 | dp2 | 2 | 10A | 10E | 10F | N/A | ... | 10H | Success |
| ds1 | dp3 | 1 | 10A | 10C | N/A | N/A | ... | N/A | Failure |
| ds1 | dp3 | 2 | 10A | 10B | 10E | 10F | ... | 10H | Success |
| ... | ... | ... | ... | ... | ... | ... | ... | ... | ... |

The following is noted regarding the log data:

- the data session ID and the data packet ID uniquely identify the data packet being transmitted, and the transmission count identifies how many transmission instances of that data packet have occurred (i.e. a value greater than one indicates a retransmission);
- The "Source router" data column identifies the router that transmitted the particular data packet;
- The "Destination Router" data column identifies the router that was the target destination of that data packet, or "N/A" if the packet never reached its destination;
- The "$n^{th}$ Intermediate Router" columns identifies one or more routers traversed by the packet in between the source and destination routers; and
- The "Success?" data column identifies whether the data packet reached the destination router.

Within this log data example there is a first network path 10A -> 10C -> 10F -> 10H (for packet ds1/dp1/1) and a second network path 10A -> 10E -> 10F -> 10H (for packet ds1/dp2/2). Routers 10C and 10E are "alternative routers" in the context of this invention as the routers immediately preceding and succeeding routers 10C and 10E are the same. In other words, one router may be used as an alternative (i.e. backup) router should the other fail. Furthermore, this log data example also illustrates a third network path 10A -> 10B -> 10E -> 10F -> 10H (for packet ds1/dp3/2). Routers 10C and the combination of 10B + 10E are "combination alternative routers" in the context of this invention as the routers immediately preceding and succeeding routers 10C and the combination of 10B + 10E are the same, such that routers 10B + 10E may be used as an alternative path should router 10C fail (and vice versa).

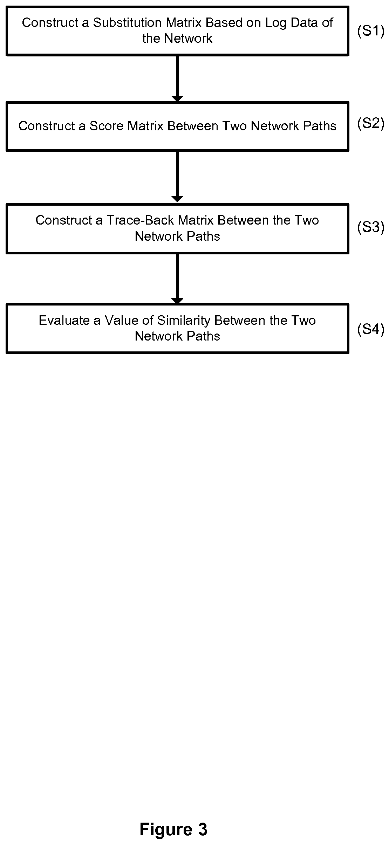

Using these concepts, an example of the dynamic sequence alignment technique will now be illustrated, with reference to Figure 3, to evaluate the similarity between the first and second network path (that is, between 10A -> 10C -> 10F -> 10H and 10A -> 10E - > 10F -> 10H). A first step, step S1, is to construct a substitution matrix from the log data. A basic substitution matrix takes the following form:

$$
\begin{pmatrix}
 & A & B & C & D & E & F & G & H & I & J \\
A & 1 & 0 & 0 & 0 & 0 & 0 & 0 & 0 & 0 & 0 \\
B & 0 & 1 & 0 & 0 & 0 & 0 & 0 & 0 & 0 & 0 \\
C & 0 & 0 & 1 & 0 & 0 & 0 & 0 & 0 & 0 & 0 \\
D & 0 & 0 & 0 & 1 & 0 & 0 & 0 & 0 & 0 & 0 \\
E & 0 & 0 & 0 & 0 & 1 & 0 & 0 & 0 & 0 & 0 \\
F & 0 & 0 & 0 & 0 & 0 & 1 & 0 & 0 & 0 & 0 \\
G & 0 & 0 & 0 & 0 & 0 & 0 & 1 & 0 & 0 & 0 \\
H & 0 & 0 & 0 & 0 & 0 & 0 & 0 & 1 & 0 & 0 \\
I & 0 & 0 & 0 & 0 & 0 & 0 & 0 & 0 & 1 & 0 \\
J & 0 & 0 & 0 & 0 & 0 & 0 & 0 & 0 & 0 & 1
\end{pmatrix}
$$

In this basic substitution matrix, the value of each matrix element, s, is:

$$
s(i,j) = \begin{cases} 0 \ if \ event(i) \neq event(j) \\ 1 \ else \end{cases} \quad (1)
$$

Thus, the basic substitution matrix is an identity matrix in which matching routers have value 1 and non-matching routers have value 0.

Although the basic substitution matrix above may be used, in this embodiment a complex substitution matrix is used in which the elements off the main diagonal (i.e. for non-matching routers) can be non-zero. In the field of bioinformatics, these non-zero values are calculated based on the likelihood and frequency of mutation between two amino acids. In the present invention, these non-zero values for a matrix element represent the likelihood and frequency of two routers being used interchangeably in the log data, and are calculated using equation (2) below:

$$
s(i,j) = log\frac{p_i \times M_{i,j}}{p_i \times p_j} \quad (2)
$$

where $0 < s(i,j) \leq 1$

In equation 2, $s$ is the value for the matrix element, $p_i$ and $p_j$ are the frequencies of routers $i$ and $j$ in the log data and $M_{ij}$ is the count of times router $j$ is used as an alternative router to router $i$.

The complex substitution matrix may then be constructed as:

$$
\begin{pmatrix}
 & A & B & C & D & E & F & G & H & I & J \\
A & 1 & s_{a,b} & s_{a,c} & s_{a,d} & s_{a,e} & s_{a,f} & s_{a,g} & s_{a,h} & s_{a,i} & s_{a,j} \\
B & s_{b,a} & 1 & s_{b,c} & s_{b,d} & s_{b,e} & s_{b,f} & s_{b,g} & s_{b,h} & s_{b,i} & s_{b,j} \\
C & s_{c,a} & s_{c,b} & 1 & s_{c,d} & s_{c,e} & s_{c,f} & s_{c,g} & s_{c,h} & s_{c,i} & s_{c,j} \\
 & \vdots & & & & \ddots & & & & \vdots & \\
I & s_{i,a} & s_{i,b} & & & \cdots & & & & 1 & s_{i,j} \\
J & s_{j,a} & s_{j,b} & & & & & & & s_{j,i} & 1
\end{pmatrix}
$$

In step S2 of this embodiment, the NMS 100 then constructs a "score matrix" between the first and second network path. The matrix elements, $h_{ij}$, are constructed based on the following equations:

$$h_{i0} = -\delta \times i \quad (3)$$

$$h_{0j} = -\delta \times j \quad (4)$$

$$h_{ij} = max\{h_{i-1,j} - \delta, h_{i-1,j-1} + s(x_i, y_j), h_{i,j-1} - \delta\} \quad (5)$$

Where

- $i$ represents a router of the first network path and takes a value in the range $\{1, \dots, len_1\}$, in which $len_1$ represents the length of the first network path (i.e. the number of "hops"),
- $j$ represents a router of the second network path from the log data and takes a value in the range $\{1, \dots, len_2\}$, in which $len_2$ represents the length of the second network path (i.e. the number of "hops"),
- $h_{i0}$ and $h_{0j}$ are calculated using equations (3) and (4) above and are initial values needed for the recursive formula in order to compute values for the elements $h_{ij}$ of the score matrix,
- $\delta$ is a predetermined gap penalty value used to lower the score matrix element value when the two sequences have a gap in their alignment (e.g. a first and last subset of the routers match, but a middle subset of routers do not). The gap penalty value (also known as an insertion/deletion penalty value in bioinformatics) may be set by the Network Operator by calibration (e.g. using a test set of data), such that $h_{i0}$, $h_{0j}$, $h_{i-1,j}$ - $\delta$ and $h_{i,j-1}$ - $\delta$ are not under or overly penalised in the determination of $h_{ij}$,
- $x_i$ and $y_j$ are the routers at positions $i$ and $j$ from the first and second network paths respectively, and
- $s(x_i, y_j)$ is the value from the substitution matrix corresponding to events $x_i$ and $y_j$.

Before continuing with the remaining steps of the embodiment of the invention, the prior steps will be applied to the present example in which the similarity between the first network path (10A -> 10C -> 10F -> 10H) and the second network path (10A -> 10E -> 10F -> 10H) is being evaluated.

First, a complex substitution matrix is constructed, in which $s_{c,e}$ is calculated - using the log data and equation (2) - to be 0.5:

$$
\begin{pmatrix}
 & A & B & C & D & E & F & G & H & I & J \\
A & 1 & 0 & 0 & 0 & 0 & 0 & 0 & 0 & 0 & 0 \\
B & 0 & 1 & 0 & 0 & 0 & 0 & 0 & 0 & 0 & 0 \\
C & 0 & 0 & 1 & 0 & 0.5 & 0 & 0 & 0 & 0 & 0 \\
 & & \vdots & & & & \ddots & & & \vdots & \\
I & 0 & 0 & & & \cdots & & & & 1 & 0 \\
J & 0 & 0 & & & & & & & 0 & 1
\end{pmatrix}
$$

Next, the first network path is evaluated against the second network path by constructing a score matrix. The score matrix for this evaluation is:

$$
\begin{pmatrix}
 & A & E & F & H \\
A & h_{1,1} & h_{1,2} & h_{1,3} & h_{1,4} \\
C & h_{2,1} & h_{2,2} & h_{2,3} & h_{2,4} \\
F & h_{3,1} & h_{3,2} & h_{3,3} & h_{3,4} \\
H & h_{4,1} & h_{4,2} & h_{4,3} & h_{4,4}
\end{pmatrix}
$$

The matrix elements, $h_{i,j}$, are computed using equations (3), (4) and (5) above, using a penalty parameter $\delta = 2$:

$$
\begin{aligned}
h_{11} &= max\{h_{01} - \delta, h_{00} + s(A,A), h_{10} - \delta\} \\
&= max\{-2 - 2, 0 + 1, -2 - 2\} \\
&= 1
\end{aligned}
$$

$$
\begin{aligned}
h_{12} &= max\{h_{02} - \delta, h_{01} + s(A,E), h_{11} - \delta\} \\
&= max\{-4 - 2, -2 + 0, 1 - 2\} \\
&= -1
\end{aligned}
$$

$$
\begin{aligned}
h_{21} &= max\{h_{11} - \delta, h_{10} + s(C,A), h_{20} - \delta\} \\
&= max\{1 - 2, -2 + 0, -4 - 2\} \\
&= -1
\end{aligned}
$$

$$
\begin{aligned}
h_{22} &= max\{h_{12} - \delta, h_{11} + s(C,E), h_{21} - \delta\} \\
&= max\{-1 - 2, 1 + 0.5, -1 - 2\} \\
&= 1.5
\end{aligned}
$$

...etc...

Once all matrix elements, $h_{i,j}$, are calculated, the score matrix is:

$$\begin{pmatrix} & A & E & F & H \\ A & 1 & -1 & -3 & -5 \\ C & -1 & 1.5 & -0.5 & -2.5 \\ F & -3 & -0.5 & 2.5 & 0.5 \\ H & -5 & -2.5 & 0.5 & 3.5 \end{pmatrix}$$

The next step of this technique is to create a trace-back matrix (step S3). The trace back matrix plots a path through the matrix from the bottom-right matrix element to the top-left matrix element. The trace-back matrix takes the same form as the score matrix (that is, the rows and columns of the matrix match the identities of the router sequences being evaluated), and the matrix elements are calculated as:

$$q(i,j) = \begin{cases} diag \ if \ h(i,j) = h(i-1,j-1) + s(i,j) \\ up \ if \ h(i,j) = h(i-1,j) - \delta \qquad (6) \\ left \ if \ h(i,j) = h(i,j-1) - \delta \end{cases}$$

Using the values of the score matrix and substitution matrix in the present example, the trace-back matrix is:

$$\begin{pmatrix} & A & E & F & H \\ A & diag & left & left & left \\ C & up & diag & left & left \\ F & up & up & diag & left \\ H & up & up & up & diag \end{pmatrix}$$

Starting from the bottom-right matrix element *q(4,4)*, the optimal path through the trace-back matrix is q(4,4) -> q(3,3) -> q(2,2) -> q(1,1).

In the next step of this technique (step S4), the NMS 100 calculates a value of similarity between the first and second network paths as the sum of values from the score matrix corresponding to the optimal path through the trace-back matrix. Using the trace-back matrix and score matrix above, this value is 3.5 + 2.5 + 1.5 + 1 = 8.5.

In this embodiment, the NMS 100 is also able to evaluate the similarity between the first network path (10A -> 10C -> 10F -> 10H) and the third network path (10A -> 10B -> 10E -> 10F -> 10H). As noted above, routers 10B + 10E are "combination alternative routers" to router 10C. However, as there are a differing number of routers in sub-sequence 10B+10E of the third network path compared to sub-sequence 10B of the first network path, the dynamic sequence alignment technique must be modified. This will now be described.

The NMS 100 compiles a modified log data table in which the combination alternative routers are replaced with a single ID. In this case, combination alternative routers 10B + 10E are given ID B1. The modified log data table in this example is,

| Data Session ID | Data Packet ID | Transmission Attempt | Source Router | 1st Int. Router | 2nd Int. Router | 3rd Int. Router | ... | Destination Router | Success? |
|---|---|---|---|---|---|---|---|---|---|
| ds1 | dp1 | 1 | 10A | 10C | 10F | N/A | ... | 10H | Success |
| ds1 | dp2 | 1 | 10A | 10C | N/A | N/A | ... | N/A | Failure |
| ds1 | dp2 | 2 | 10A | 10E | 10F | N/A | ... | 10H | Success |
| ds1 | dp3 | 1 | 10A | 10C | N/A | N/A | ... | N/A | Failure |
| ds1 | dp3 | 2 | 10A | 10B1 | 10F | ... | ... | 10H | Success |
| ... | ... | ... | ... | ... | ... | ... | ... | ... | ... |

A substitution matrix may now be created in which the single alternative routers and combination alternative routers are identified and evaluated. Accordingly, a complex substitution matrix may be compiled in which the values of each matrix element represent the likelihood of an alternative router (or combination alternative routers) are used instead of another router in the log data, and are again calculated based on equation (2),

$$s(i,j) = log \frac{p_i \times M_{i,j}}{p_i \times p_j} \qquad (2)$$

where $0 < s(i,j) \leq 1$ in which s is the value for the matrix element, $p_i$ and $p_j$ are the frequencies of routers $i$ and $j$ in the log data and $M_{ij}$ is the count of times router $j$ is used as an alternative router to router $i$. In this embodiment, the routers may be either a single router or one of the identified combination alternative routers. Thus, the combination B1 (i.e.10B + 10E) may be counted in the log data to determine $p_i$ and $p_j$ and the number of times it is used as an alternative to router 10C may be used to calculate $M_{C,B1}$.

The complex substitution matrix may then be constructed as,

$$
\begin{array}{c c c c c c c c c c c}
 & A & B & B1 & C & D & E & F & G & H & I & J \\
A & 1 & s_{a,b} & s_{a,b1} & s_{a,c} & s_{a,d} & s_{a,e} & s_{a,f} & s_{a,g} & s_{a,h} & s_{a,i} & s_{a,j} \\
B & s_{b,a} & 1 & s_{b,b1} & s_{b,c} & s_{b,d} & s_{b,e} & s_{b,f} & s_{b,g} & s_{b,h} & s_{b,i} & s_{b,j} \\
B1 & s_{b1,a} & s_{b1,b} & 1 & s_{b1,c} & s_{b1,d} & s_{b1,e} & s_{b1,f} & s_{b1,g} & s_{b1,h} & s_{b1,i} & s_{b1,j} \\
C & s_{c,a} & s_{c,b} & s_{c,b1} & 1 & s_{c,d} & s_{c,e} & s_{c,f} & s_{c,g} & s_{c,h} & s_{c,i} & s_{c,j} \\
 & \vdots & & & & & \ddots & & & & \vdots & \\
I & s_{i,a} & s_{i,b} & & & & \cdots & & & & 1 & s_{i,j} \\
J & s_{j,a} & s_{j,b} & & & & & & & & s_{j,i} & 1 \\
\end{array}
$$

In this example, the evaluated substitution matrix is:

$$
\begin{array}{c c c c c c c c c c c}
 & A & B & B1 & C & D & E & F & G & H & I & J \\
A & 1 & 0 & 0 & 0 & 0 & 0 & 0 & 0 & 0 & 0 & 0 \\
B & 0 & 1 & 0 & 0 & 0 & 0 & 0 & 0 & 0 & 0 & 0 \\
B1 & 0 & 0 & 1 & 0.45 & 0 & 0 & 0 & 0 & 0 & 0.3 & 0 \\
C & 0 & 0 & 0.4 & 1 & 0 & 0.5 & 0 & 0 & 0 & 0 & 0 \\
 & \vdots & & & & & \ddots & & & & \vdots & \\
I & 0 & 0 & & & & \cdots & & & & 1 & 0 \\
J & 0 & 0 & & & & & & & & 0 & 1 \\
\end{array}
$$

The NMS 100 then creates a score matrix between the first and third network path, which is now possible as the combination alternative routers 10B + 10E of third network path have been given a single ID, B1:

$$\begin{pmatrix} & A & C & F & H \\ A & h_{1,1} & h_{1,2} & h_{1,3} & h_{1,4} \\ B1 & h_{2,1} & h_{2,2} & h_{2,3} & h_{2,4} \\ F & h_{3,1} & h_{3,2} & h_{3,3} & h_{3,4} \\ H & h_{4,1} & h_{4,2} & h_{4,3} & h_{4,4} \end{pmatrix}$$

The matrix elements, $h_{i,j}$, are computed using equations (3), (4) and (5) above, using a penalty parameter $\delta = 2$:

$$h_{11} = max\{h_{0,1} - \delta, h_{0,0} + s(A,A), h_{1,0} - \delta, 0\}$$
$$= max\{0 - 2, 0 + 1, 0 - 2, 0\}$$
$$= 1$$

$$h_{12} = max\{h_{0,2} - \delta, h_{0,1} + s(A,C), h_{1,1} - \delta, 0\}$$
$$= max\{0 - 2, 0 + 0, 0 - 2, 0\}$$
$$= 0$$

$$h_{21} = max\{h_{1,1} - \delta, h_{1,0} + s(B1,A), h_{2,0} - \delta, 0\}$$
$$= max\{1 - 2, 0 + 0, 0 - 2, 0\}$$
$$= 0$$

... etc ...

The score matrix and trace-back matrix can therefore be created, and a value of similarity may therefore be determined, for the first and third network paths.

In a further enhancement to this method, one or more "variants" of paths through the network are evaluated. This is achieved in the following manner. First, the log data for the network is analysed to determine a plurality of alternative routers and combination alternative routers. In the example data above, it was shown that router 10E and combination alternative routers 10B + 10E are alternative routers and combination alternative routers for router 10C. A mapping table is then created which identifies original routers and their alternative/combination alternative routers. For the purposes of this example, we shall assume that the log data includes further data (than identified in the example above) to create the following mapping table:

| ID | Original Router | Alternative Router(s) |
|----|-----------------|-----------------------|
| 1  | 10C             | 10E                   |
| 2  | 10C             | 10B, 10E              |
| 3  | 10C             | 10K, 10L              |

Routers 10K and 10L are not shown in Figure 1, but in this example represent an alternative path for packets instead of router 10C.

Based on this mapping table, the NMS 100 is able to create a variant of the first network path (10A -> 10C -> 10F -> 10H), by reviewing the mapping table to determine that routers 10K + 10L are combination alternative routers that can be used instead of router 10C, such that 10A -> 10K -> 10L -> 10F -> 10H is a variant of the first network path. The NMS 100 may also determine whether the variant of the proposed path is a viable path (e.g. by checking that communication paths exist between 10A and 10K and between 10L and 10F) before continuing with the following process.

Following the method detailed above, the NMS 100 is able to create a substitution matrix, score matrix and trace-back matrix for not only the first network path, but also the variant of the first network path, to determine a value of similarity with another (e.g. the second or third) network path. The value of similarity may then be some function of the evaluated value of similarity based on the first network path and the evaluated value of similarity based on the variant of the first network path. The NMS 100 may also apply weightings to this function such that the influence of the variant(s) is less than that of the first network path.

A second embodiment of an NMS will now be described. The NMS 100 is substantially similar to that of the first embodiment, and the same reference numerals will be used. In this embodiment, the NMS 100 is configured to receive data including an identifier for a website accessed by a user (e.g. a URL) and a timestamp indicating the date and time of access. The NMS 100 may then store this log data in memory 105, which may then be ordered (by the timestamp) to identify a sequence of websites accessed by a user in a particular session. An example of this log data is shown in the following table:

| ID | Sequence of Websites |
|----|----------------------|
| 1  | P1, P2, P3, P4       |
| 2  | P1, P5, P3, P4       |
| 3  | P1, P7, P8, P3, P4   |

In this embodiment, the NMS 100 is configured to use a Markov model to predict the next website to be accessed by a user. This is useful as the user may begin downloading data for the predicted next website before the user instructs the computing system to access it, which will reduce the time to load the website as the data is already locally available. The Markov model uses a transition matrix of the following form to predict the next website:

$$M = \begin{pmatrix} & P1 & P2 & P3 & P4 \\ State1 & m_{1,1} & m_{1,2} & m_{1,3} & m_{1,4} \\ State2 & m_{2,1} & m_{2,2} & m_{2,3} & m_{2,4} \\ State3 & m_{3,1} & m_{3,2} & m_{3,3} & m_{3,4} \end{pmatrix}$$

The NMS 100 prediction for the next webpage is based on its state, i (based on the user's immediately preceding accessed webpage(s)) and the probabilities for that state. For example, a 3$^{rd}$ order Markov model transition matrix may be created based on historical data to identify three states: State1=P1, P3, P4; State2=P2, P3, P5; and State3=P3, P4, P5. If the user's recently accessed websites are P4, P2, P3 and P5, then the NMS 100 may determine that the most recent 3 webpages are P2, P3 and P5, which corresponds to State2 of the transition matrix. The NMS 100 then determines which webpage of P1 to P4 has the highest probability for State2 (i.e. max($m_{2,1}, m_{2,2}, m_{2,3}, m_{2,4}$)), and this is the predicted next webpage for that user.

In this embodiment, the NMS 100 is also able to predict the next website based on the user's previous webpages, even if those previous webpages do not correspond to a state in the transition matrix. For example, if the user has previously accessed webpages P1, P2, P4 and P5, then the previous three webpages (P2, P4 and P5) do not correspond to any of States 1 to 3 of the transition matrix. The NMS 100 then predicts a next website for the user using the following method.

First, the NMS 100 analyses the log data to identify instances in which a website has been used as an alternative website for another website (e.g. P5 instead of P2 in log data entries 1 and 2) or when a combination of websites have been used an alternative websites for another website (e.g. P7 and P8 instead of P2 in log data entries 1 and 3). The NMS 100 then produces a modified log data table in which the combination alternative websites are explicitly identified with a unique ID:

| ID | Sequence of Websites |
|----|----------------------|
| 1  | P1, P2, P3, P4       |
| 2  | P1, P5, P3, P4       |
| 3  | P1, P7, P8, P3, P4   |
| 4  | P1, P2-1, P3, P4     |

The NMS 100 then constructs a substitution matrix based on the modified log data:

$$\begin{pmatrix}
 & P1 & P2 & P3 & P4 & P5 & P6 & P7 & P8 & P2-1 \\
P1 & 1 & s_{1,2} & s_{1,3} & s_{1,4} & s_{1,5} & s_{1,6} & s_{1,7} & s_{1,8} & s_{1,2-1} \\
P2 & s_{2,1} & 1 & s_{2,3} & s_{2,4} & s_{2,5} & s_{2,6} & s_{2,7} & s_{2,8} & s_{2,2-1} \\
P3 & s_{3,1} & s_{3,2} & 1 & s_{3,4} & s_{3,5} & s_{3,6} & s_{3,7} & s_{3,8} & s_{3,2-1} \\
P4 & s_{4,1} & s_{4,2} & s_{4,3} & 1 & s_{4,5} & s_{4,6} & s_{4,7} & s_{4,8} & s_{4,2-1} \\
P5 & & & & & & & & & \\
P6 & \vdots & & & & & \ddots & & & \\
P7 & & & & & & & 1 & & \\
P8 & s_{8,1} & s_{8,2} & s_{8,3} & s_{8,4} & s_{8,5} & s_{8,6} & s_{8,7} & 1 & s_{8,2-1} \\
P2-1 & s_{2-1,1} & s_{2-1,2} & s_{2-1,3} & s_{2-1,4} & s_{2-1,5} & s_{2-1,6} & s_{2-1,7} & s_{2-1,8} & 1
\end{pmatrix}$$

As in the first embodiment, the values for $s_{i,j}$ are evaluating the following equation using the log data:

$$s(i,j) = log\frac{p_i \times M_{i,j}}{p_i \times p_j}$$

where $0 < s(i,j) \le 1$

in which s is the value for the matrix element, $p_i$ and $p_j$ are the frequencies of websites $i$ and $j$ in the log data and $M_{ij}$ is the count of times website $j$ is used as an alternative website to website $i$. As in the first embodiment, i and $j$ may also represent combination alternative websites, such that $p_i$ and $p_j$ may represent the count of combination P7 and P8 in the log data and $M_{i,j}$ may represent the count of combination P7 and P8 being used as alternative websites to P2. In this example, the substitution matrix is evaluated to be:

$$\begin{pmatrix}
 & P1 & P2 & P3 & P4 & P5 & P6 & P7 & P8 & P2-1 \\
P1 & 1 & 0 & 0 & 0 & 0 & 0 & 0 & 0 & 0 \\
P2 & 0 & 1 & 0.5 & 0 & 0 & 0 & 0 & 0 & 0 \\
P3 & 0 & 0 & 1 & 0 & 0 & 0 & 0 & 0 & 0 \\
P4 & 0 & 0 & 0 & 1 & 0 & 0 & 0 & 0 & 0 \\
P5 & 0 & 0 & 0 & 0 & 1 & 0 & 0 & 0 & 0 \\
P6 & 0 & 0 & 0 & 0 & 0 & 1 & 0 & 0 & 0 \\
P7 & 0 & 0 & 0 & 0 & 0 & 0 & 1 & 0 & 0 \\
P8 & 0 & 0 & 0 & 0 & 0 & 0 & 0 & 1 & 0 \\
P2-1 & 0 & 0 & 0 & 0 & 0 & 0 & 0 & 0 & 1
\end{pmatrix}$$

In the next step, the NMS 100 evaluates a score matrix between the previous three websites (P2, P4 and P5) and each of the three states of the current Markov transition matrix. The score matrix between the previous three websites and State1 is:

$$\begin{pmatrix}
 & P1 & P3 & P4 \\
P2 & h_{1,1} & h_{1,2} & h_{1,3} \\
P4 & h_{2,1} & h_{2,2} & h_{2,3} \\
P5 & h_{3,1} & h_{3,2} & h_{3,3}
\end{pmatrix}$$

As in the first embodiment, these values may be computed using equations (3), (4) and (5) and a penalty parameter $\delta=1$:

$$h_{11} = max\{h_{0,1} - \delta, h_{0,0} + s(P2,P1), h_{1,0} - \delta, 0\}$$
$$= max\{0 - 1, 0 + 0, 0 - 1, 0\}$$
$$= 0$$

13

$$h_{12} = max\{h_{0,2} - \delta, h_{0,1} + s(P2, P3), h_{1,1} - \delta, 0\}$$
$$= max\{0 - 1, 0 + 0.5, 0 - 1, 0\}$$
$$= 0.5$$

$$h_{13} = max\{h_{0,3} - \delta, h_{0,2} + s(P2, P4), h_{1,2} - \delta, 0\}$$
$$= max\{0 - 1, 0 + 0, 0.5 - 1, 0\}$$
$$= 0$$

$$h_{21} = max\{h_{1,1} - \delta, h_{1,0} + s(P4, P1), h_{2,0} - \delta, 0\}$$
$$= max\{0 - 1, 0 + 0, 0 - 1, 0\}$$
$$= 0$$

$$h_{22} = max\{h_{1,2} - \delta, h_{1,1} + s(P4, P1), h_{2,1} - \delta, 0\}$$
$$= max\{0.5 - 1, 0 + 0, 0 - 1, 0\}$$
$$= 0$$

... *etc* ...

Once all values are evaluated, the matrix is:

$$\begin{pmatrix} & P1 & P3 & P4 \\ P2 & 0 & 0.5 & 0 \\ P4 & 0 & 0 & 0 \\ P5 & 0 & 0 & 0 \end{pmatrix}$$

Using the local sequence alignment technique, the evaluated similarity between the previously access websites and the first state is therefore 0.5.

The NMS 100 then repeats this process for each state, which returns similarity scores of 2 for State 2 and 2.5 for State 3. Accordingly, the most similar state to the previously accessed websites is State 3. Based on this determination, the NMS 100 creates a new entry in the Markov transition matrix, State4, corresponding to website sequence P2, P4 and P5, which uses the same probability values for websites P1, P2, P3 and P4 as used for State 3:

$$M = \begin{pmatrix} & P1 & P2 & P3 & P4 \\ State1 & m_{1,1} & m_{1,2} & m_{1,3} & m_{1,4} \\ State2 & m_{2,1} & m_{2,2} & m_{2,3} & m_{2,4} \\ State3 & m_{3,1} & m_{3,2} & m_{3,3} & m_{3,4} \\ State4 & m_{4,1} & m_{4,2} & m_{4,3} & m_{4,4} \end{pmatrix}$$

Where $m_{3,j} = m_{4,j}$.

The skilled person will understand that it is possible to create a variant of the three previously accessed websites using the log data in the same manner as the first embodiment. For example, website sequence P2, P4 and P5 may have a variant P2-1, P4 and P5. The similarity between the three previously accessed websites, and their variants, with the Markov transition matrix states may therefore be evaluated in order to determine the most similar state.

The skilled person will understand that the sequence processing techniques described in the first and second embodiments are examples only and the concepts of the present invention may be applied in many other ways. In particular, the second embodiment is not limited to the use of 3rd order Markov models, as any order may be used, and the sequence alignment technique may be global or local alignment in either embodiment. Furthermore, the skilled person will understand that the above method of the present invention may be performed by any computing device, and not just the NMS of the examples above. The method may also be performed locally (that is, at the node collecting the relevant data), or by another entity (configured to receive the relevant data).

The skilled person will also understand that the method of the present invention may be applied to sequences within any data set. Data sets may be recorded or received in discrete amounts (thus defining a start and end to the sequence) or via a continuous stream, but the method may also define starts and ends to sequences in other ways, such as logical starts and end points based on the data set or by using a sliding window to separate the data set into sequences of defined length.

**Claims**

1.  A method for predicting a property of a first sequence in a computing system (1), the method comprising the steps of:

    a) receiving data of a plurality of historical sequences in the computing system (1), wherein the data for each historical sequence identifies each point in the historical sequence and further includes a property of each of the plurality of historical sequences;
    b) analysing the data to identify a first and second alternative sub-sequence within the first sequence and a second sequence, said second sequence taken from the plurality of historical sequences, wherein the first alternative sub-sequence includes a first common point identified in both the first and second sequence, a first intermediate point identified in the first sequence, and a second common point identified in both the first and second sequences, and the second alternative sub-sequence includes the first common point, a plurality of intermediate points identified in the second sequence, and the second common point;
    c) defining a virtual point as the plurality of intermediate points and a virtual sub-sequence as the first common point followed by the virtual point followed by the second common point;
    d) processing the first sequence in the computing system (1), said first sequence containing the second alternative sub-sequence, by replacing, in said first sequence, the second alternative sub-sequence with the virtual sub-sequence, and defining the resulting sequence as a first variant sequence;
    (e) predicting a property of the first sequence in the computing system (1) by

        i) calculating a value of similarity between the first variant sequence and each of the plurality of historical sequences having the same count of constituent points as the first variant sequence, and
        ii) predicting the property of the first sequence based on the calculated values of similarity,
        wherein the computing system is a computing network, wherein the sequences in the computing system are paths in the computing network, wherein the points in the sequences are routers, and
        wherein the predicting serves network management of the computing network.

2.  A computer program product comprising instructions which, when the program is executed by a computer, causes the computer to carry out the steps of the method of Claim 1.

3.  A device (100) for predicting a property of a first sequence in a computing system (1), the device comprising a transceiver (101) adapted to receive data of a plurality of historical sequences in the computing system, wherein the data for each historical sequence identifies each point in the historical sequence and further includes a property of each of the plurality of historical sequences; and a processor (103) adapted to:

    analyse the data to identify a first and second alternative sub-sequence within the first sequence and a second sequence, said second sequence taken from the plurality of historical sequences, wherein the first alternative sub-sequence includes a first common point identified in both the first and second sequence, a first intermediate point identified in the first sequence, and a second common point identified in both the first and second sequences, and the second alternative sub-sequence includes the first common point, a plurality of intermediate points identified in the second sequence, and the second common point;
    define a virtual point as the plurality of intermediate points and a virtual sub-sequence as the first common point followed by the virtual point followed by the second common point;
    process the first sequence in the computing system (1), said first sequence containing the second alternative sub-sequence, by replacing, in said first sequence, the second alternative sub-sequence with the virtual sub-sequence, and defining the resulting sequence as a first variant sequence; and
    predict a property of the first sequence in the computing system (1) by

calculating a value of similarity between the first variant sequence and each of the plurality of historical sequences having the same count of constituent points as the first variant sequence, and predicting the property of the first sequence based on the calculated values of similarity,

wherein the computing system is a computing network, wherein the sequences in the computing system are paths in the computing network, wherein the points in the sequences are routers, and wherein the predicting serves network management of the computing network.

4. A device as claimed in Claim 3, being a Network Management System (100).

**Patentansprüche**

1. Verfahren zur Vorhersage einer Eigenschaft einer ersten Sequenz in einem Rechensystem (1), das Verfahren umfassend die folgenden Schritte:

a) Empfangen von Daten einer Mehrzahl von historischen Sequenzen in dem Rechensystem (1), wobei die Daten für jede historische Sequenz jeden Punkt in der historischen Sequenz kennzeichnen und ferner eine Eigenschaft jeder der Mehrzahl von historischen Sequenzen enthält;

b) Analysieren der Daten, um eine erste und zweite alternative Untersequenz innerhalb der ersten Sequenz und einer zweiten Sequenz zu kennzeichnen, wobei die zweite Sequenz aus der Mehrzahl von historischen Sequenzen genommen wird, wobei die erste alternative Untersequenz einen ersten gemeinsamen Punkt enthält, der sowohl in der ersten als auch der zweiten Sequenz gekennzeichnet ist, einen ersten Zwischenpunkt, der in der ersten Sequenz gekennzeichnet ist, und einen zweiten gemeinsamen Punkt, der sowohl in der ersten als auch der zweiten Sequenz gekennzeichnet ist, und die zweite alternative Untersequenz den ersten gemeinsamen Punkt, eine Mehrzahl von Zwischenpunkten, die in der zweiten Sequenz gekennzeichnet sind, und den zweiten gemeinsamen Punkt enthält;

c) Definieren eines virtuellen Punktes als die Mehrzahl von Zwischenpunkten und einer virtuellen Untersequenz als der erste gemeinsame Punkt gefolgt von dem virtuellen Punkt gefolgt von dem zweiten gemeinsamen Punkt;

d) Verarbeiten der ersten Sequenz in dem Rechensystem (1), wobei die erste Sequenz die zweite alternative Untersequenz enthält, durch Ersetzen, in der ersten Sequenz, der zweiten alternativen Untersequenz durch die virtuelle Untersequenz und Definieren der resultierenden Sequenz als eine erste Variantensequenz;

(e) Vorhersagen einer Eigenschaft der ersten Sequenz in dem Rechensystem (1) durch

i) Berechnen eines Werts einer Ähnlichkeit zwischen der ersten Variantensequenz und jeder der Mehrzahl von historischen Sequenzen mit derselben Anzahl von konstituierenden Punkten als die erste Variantensequenz, und

ii) Vorhersagen der Eigenschaft der ersten Sequenz auf Grundlage der berechneten Ähnlichkeitswerte, wobei das Rechensystem ein Rechennetzwerk ist, wobei die Sequenzen in dem Rechensystem Pfade in dem Rechensystem sind, wobei die Punkte in den Sequenzen Router sind, und wobei das Vorhersagen der Netzwerkverwaltung des Rechennetzwerks dient.

2. Computerprogrammprodukt umfassend Anweisungen, die, wenn das Programm durch einen Computer ausgeführt wird, den Computer veranlassen, die Schritte des Verfahrens nach Anspruch 1 durchzuführen.

3. Vorrichtung (100) zur Vorhersage einer Eigenschaft einer ersten Sequenz in einem Rechensystem (1), die Vorrichtung umfassend
einen Sendeempfänger (101), der geeignet ist, Daten einer Mehrzahl von historischen Sequenzen in dem Rechensystem zu empfangen, wobei die Daten für jede historische Sequenz jeden Punkt in der historischen Sequenz kennzeichnen und ferner eine Eigenschaft jeder der Mehrzahl von historischen Sequenzen enthalten; und einen Prozessor (103), der geeignet ist:

die Daten zu analysieren, um eine erste und zweite alternative Untersequenz innerhalb der ersten Sequenz und einer zweiten Sequenz zu kennzeichnen, wobei die zweite Sequenz aus der Mehrzahl von historischen Sequenzen genommen wird, wobei die erste alternative Untersequenz einen ersten gemeinsamen Punkt enthält, der sowohl in der ersten als auch der zweiten Sequenz gekennzeichnet ist, einen ersten Zwischenpunkt, der in der ersten Sequenz gekennzeichnet ist, und einen zweiten gemeinsamen Punkt, der sowohl in der ersten als auch der zweiten Sequenz gekennzeichnet ist, und die zweite alternative Untersequenz den ersten gemeinsamen Punkt, eine Mehrzahl von Zwischenpunkten, die in der zweiten Sequenz gekennzeichnet sind, und den zweiten gemeinsamen Punkt enthält;

einen virtuellen Punkt als die Mehrzahl von Zwischenpunkten und eine virtuelle Untersequenz als der erste gemeinsame Punkt, gefolgt von dem virtuellen Punkt, gefolgt von dem zweiten gemeinsamen Punkt, zu definieren;

die erste Sequenz in dem Rechensystem (1) zu verarbeiten, wobei die erste Sequenz die zweite alternative Untersequenz enthält, durch Ersetzen, in der ersten Sequenz, der zweiten alternativen Untersequenz durch die virtuelle Untersequenz und Definieren der resultierenden Sequenz als eine erste Variantensequenz; und

eine Eigenschaft der ersten Sequenz in dem Rechensystem (1) vorherzusagen, durch Berechnen eines Werts einer Ähnlichkeit zwischen der ersten Variantensequenz und jeder der Mehrzahl von historischen Sequenzen mit derselben Anzahl von konstituierenden Punkten als die erste Variantensequenz, und

Vorhersagen der Eigenschaft der ersten Sequenz auf Grundlage der berechneten Ähnlichkeitswerte,

wobei das Rechensystem ein Rechennetzwerk ist, wobei die Sequenzen in dem Rechensystem Pfade in dem Rechensystem sind, wobei die Punkte in den Sequenzen Router sind, und

wobei das Vorhersagen der Netzwerkverwaltung des Rechennetzwerks dient.

**4.** Vorrichtung nach Anspruch 3, die ein Netzwerkverwaltungssystem (100) ist.

## Revendications

**1.** Procédé de prédiction d'une propriété d'une première séquence dans un système informatique (1), le procédé comprenant les étapes consistant à :

a) recevoir des données d'une pluralité de séquences historiques dans le système informatique (1), les données de chaque séquence historique identifiant chaque point dans la séquence historique et incluant en outre une propriété de chaque séquence historique de la pluralité de séquences historiques ;

b) analyser les données pour identifier une première et une seconde sous-séquence alternative dans la première séquence et une seconde séquence, ladite seconde séquence étant prise dans la pluralité de séquences historiques, la première sous-séquence alternative incluant un premier point commun identifié dans les première et seconde séquences, un premier point intermédiaire identifié dans la première séquence et un second point commun identifié dans les première et seconde séquences, et la seconde sous-séquence alternative incluant le premier point commun, une pluralité de points intermédiaires identifiés dans la seconde séquence et le second point commun ;

c) définir un point virtuel en tant que pluralité de points intermédiaires et une sous-séquence virtuelle en tant que premier point commun suivi du point virtuel suivi du second point commun ;

d) traiter la première séquence dans le système informatique (1), ladite première séquence contenant la seconde sous-séquence alternative, en remplaçant, dans ladite première séquence, la seconde sous-séquence alternative par la sous-séquence virtuelle, et définir la séquence résultante en tant que première séquence variante ;

e) prédire une propriété de la première séquence dans le système informatique (1) en effectuant les opérations consistant à :

i) calculer une valeur de similarité entre la première séquence variante et chaque séquence historique de la pluralité de séquences historiques ayant le même nombre de points constituants que la première séquence variante, et

ii) prédire la propriété de la première séquence sur la base des valeurs de similarité calculées,

le système informatique étant un réseau informatique, les séquences dans le système informatique étant des chemins dans le réseau informatique, les points dans les séquences étant des routeurs, et

la prédiction servant de gestion de réseau du réseau informatique.

**2.** Produit de programme informatique comprenant des instructions qui, lorsque le programme est exécuté par un ordinateur, amènent l'ordinateur à réaliser les étapes du procédé selon la revendication 1.

**3.** Dispositif (100) de prédiction d'une propriété d'une première séquence dans un système informatique (1), le dispositif comprenant :

un émetteur-récepteur (101), conçu pour recevoir des données d'une pluralité de séquences historiques dans le système informatique, les données de chaque séquence historique identifiant chaque point dans la séquence historique et incluant en outre une propriété de chaque séquence historique de la pluralité de séquences historiques ; et

un processeur (103) conçu pour :

analyser les données pour identifier une première et une seconde sous-séquence alternative dans la première séquence et une seconde séquence, ladite seconde séquence étant prise dans la pluralité de séquences historiques, la première sous-séquence alternative incluant un premier point commun identifié dans les première et seconde séquences, un premier point intermédiaire identifié dans la première séquence et un second point commun identifié dans les première et seconde séquences, et la seconde sous-séquence alternative incluant le premier point commun, une pluralité de points intermédiaires identifiés dans la seconde séquence et le second point commun ;

définir un point virtuel en tant que pluralité de points intermédiaires et une sous-séquence virtuelle en tant que premier point commun suivi du point virtuel suivi du second point commun ;

traiter la première séquence dans le système informatique (1), ladite première séquence contenant la seconde sous-séquence alternative, en remplaçant, dans ladite première séquence, la seconde sous-séquence alternative par la sous-séquence virtuelle, et définir la séquence résultante en tant que première séquence variante ; et

prédire une propriété de la première séquence dans le système informatique (1) en effectuant les opérations consistant à :

calculer une valeur de similarité entre la première séquence variante et chaque séquence historique de la pluralité de séquences historiques ayant le même nombre de points constituants que la première séquence variante, et

prédire la propriété de la première séquence sur la base des valeurs de similarité calculées,

le système informatique étant un réseau informatique, les séquences dans le système informatique étant des chemins dans le réseau informatique, les points dans les séquences étant des routeurs, et

la prédiction servant de gestion de réseau du réseau informatique.

4. Dispositif selon la revendication 3, le dispositif étant un système de gestion de réseau (100).

100

103

Processor

101

105

Memory

107

**Figure 1**

**Figure 2**

```
┌─────────────────────────────────────────────┐
│  Construct a Substitution Matrix Based on     │   (S1)
│           Log Data of the Network             │
└─────────────────────────────────────────────┘
                      │
                      ▼
┌─────────────────────────────────────────────┐
│  Construct a Score Matrix Between Two          │   (S2)
│              Network Paths                      │
└─────────────────────────────────────────────┘
                      │
                      ▼
┌─────────────────────────────────────────────┐
│  Construct a Trace-Back Matrix Between the     │   (S3)
│            Two Network Paths                    │
└─────────────────────────────────────────────┘
                      │
                      ▼
┌─────────────────────────────────────────────┐
│  Evaluate a Value of Similarity Between the    │   (S4)
│           Two Network Paths                     │
└─────────────────────────────────────────────┘
```

**Figure 3**

**EP 3 285 442 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6665271 B1

**Non-patent literature cited in the description**

- **JOSEPH B. KRUSKAL ; DAVID SANKOFF.** *An Anthology of Algorithms and Concepts for Sequence Comparison*